# EUROPEAN PATENT APPLICATION

(11) **EP 1 156 630 A1**
(43) Date of publication of application: **21.11.2001**
(21) Application number: 00440141.0
(22) Date of filing: 15.05.2000
(51) Int. Cl.: H04L 12/58, H04M 3/533, H04M 3/493, H04M 7/00

(54) **Method for automatically returning a phone call upon receipt of an electronic mail and using directory inquiries services to obtain the phone number**

(71) Applicant: ALCATEL, 75008 Paris (FR)
(72) Inventor: Diebolt, Frank, 67200 Strasbourg (FR); Simon, Cédric, 67400 Illkirch (FR); Marchand, Jean-Philippe, 67640 Fegersheim (FR); Dos-Santos, Daniel, 67530 Klingenthal (FR); Villars, Sébastien, 67400 Illkirch (FR)
(74) Representative: Rausch, Gabriele, Dr.

(57) **Abstract**

The present invention concerns a method for automatically setting up a telephone link, with the author or the sender of a received electronic mail.

The method comprises the following steps:
- extracting from the electronic mail or from an attachment (1) e.g. card, the phone number, the name or other identifying features of the author or sender;
- searching, if not available from the electronic mail, for the phone number in at least one accessible directory, internet/intranet, private or public telephone directory (3,4,5,6), on the basis of the identified name or features;
- setting up a telecommunication link between the telecommunication device (2) of the addressee of said received electronic mail and the telecommunication device assigned to the retrieved phone number.

## Description

The present invention concerns generally telecommunication services, especially in connection with electronic mails, and more particularly a method for automatically returning a phone call upon receipt of an electronic mail (email).

When receiving an email, it is, sometimes, still easier and faster to make a call to the author of the received email than to reply to it in electronic or any other form. It may stay the best, most pleasant and most efficient way to pursue a discussion.

It is quite common to have an access to some phonebooks. It does not guarantee to find the requested phone number, especially if the person to contact is e.g. a new client or somebody from another country.

Another problem is that no phone number is attached to most received emails as an email sent through the SMTP protocol has a limited amount of properties and no structured header with user information such as a phone number.
A new service called "vCard" was therefore developed to ensure that the addressee of any received email gets also the necessary personal information regarding the author of that email (cf.: vCard V2.1 Specification from the Internet Mail Consortium and the vCard V3.0 Specification approved as a proposed standard by the IETF).

It is sent as an extension in attachment form. But that service is still not widely supported as it must be activated by the user in order to add the card to all sent emails and has to be filled out with the personal information that should appear on this kind of electronic business card.
Furthermore, this "vCard" service does not comprise an interface between a telecommunication device and the phone number found in that attachment, to build up a phone call.

The problem to be solved by the present invention is to propose a method which allows a user to initiate a phone call or build up any other telecommunication link to another person who has sent him an email, said method being carried out automatically and providing the maximum chances of success in establishing the said link, whether said other person's phone number or similar telecommunication number is known or not (beforehand or from the sent email).

Therefore, the present invention mainly concerns a method for building up automatically a telecommunication link, especially a telephone link, with the author and/or the sender of a received electronic mail or other message, characterised in that it comprises at least the following steps:
- extracting from the electronic mail or from an extension thereof the phone number, the name and/or other identifying coordinates of the author or sender;
- searching, if not available directly from the electronic mail, for the phone number in at least one accessible directory, on the basis of the identified name or coordinates;
- setting up a telecommunication link between the telecommunication device of the addressee of said received electronic mail and the telecommunication device assigned to the retrieved phone number.

This invention will be better understood thanks to the following description explaining the physical basis of the invention and a preferred embodiment of the latter as a non limitative example, in connection with the enclosed shematical drawing.

According to the basic idea of the invention, when an email is received, then a search after the phone number of the author of the email, in one or several electronic phonebooks, directories or similar databases and in the content of the email or an extension or attachment 1 thereof, is activated, after the addressee has delivered a corresponding instruction or selected the concerned service.

The phone number search will be based on the main distinguishing information available, namely the sender's first and last name stored in the header of the SMTP message and thus mostly available as a message property in the message store.

Preferably, the phone number search will be carried out in directories selected from the group consisting of: a) the addressee's private directory 3, b) a company phone or address book 4, for example accessible via a lightweight directory access protocol LDAP (defined in RFC 1777), c) a company PBX subscriber directory 5, for example accessible through a proprietary access protocol such as an application programming interface API (such as ACAPI: Alcatel Configuration API), d) an internet phonebook(s) provider site 6 accessible via HTTP, and e) at least one telecommunication company phone directory stored on a specific support, such as a CD ROM.

According to a first embodiment of the invention, the following programmed steps are successively performed until the phone number of the author and/or sender is found:
- a) extracting from the received electronic mail the name and/or other identifying coordinates of the author and/or sender, checking if the extracted name and/or other coordinates match(es) with any name or coordinate of the addressee's private directory and, if the case occurs, providing the concerned phone number;
- b) verifying if an electronic mail extension, consisting of a standard formated mail attachment containing personal information about the author or sender (such as for example a "vCard": see RFC 2426), is present and, if the case occurs, extracting the phone number from it;
- c) performing successively, based on the name and/or other coordinates of the author or sender and until the searched phone number is retrieved, searches in the company's phone or address book (for example LAN accessible directory), in the company's PBX subscriber directory, in one or several electronically stored, integrated telecommunication company phonebook(s) and in at least one phonebook or directory accessible through internet.

According to a second embodiment of the invention, the following steps are successively performed until the phone number of the author and/or sender is found:
- a) verifying if an electronic mail extension, consisting of a standard formated mail attachment containing personal information about the author or sender, is present and, if the case occurs, extracting the phone number from it;
- b) extracting from the received electronic mail the name and/or other identifying coordinates of the author and/or sender, checking if the extracted name and/or other coordinates match(es) with any name or coordinate of the addressee's private directory and, if the case occurs, providing the concerned phone number;
- c) performing successively, based on the name and/or other coordinates of the author or sender and until the searched phone number is retrieved, searches in the company's phone or address book, in the company's PBX subscriber directory, in one or several electronically stored, integrated telecommunication company phonebook(s) and in at least one through internet accessible phonebook or directory.

The selection of one of the two practical search strategies set forth above can depend on the extend of the private and/or company's directory, the position or quality of the user (employee getting mainly emails from a priori unknown persons or new customers, clients or suppliers; employee getting mainly emails from known persons, working colleagues or usual clients or suppliers).

It should be understood that the two previous non limiting embodiments only indicate an order of priority in the way to carry out the search by interrogating successively various accessible sources of information. Once the phone number is found, the search is of course stopped and the subsequent steps are not carried out.

In order to increase the success rate in establishing the telecommunication link with the author or sender at the first trial, it can be provided that, as soon as the phone number of the author or sender has been provided by any of the various sources, the said phone number is submitted to the addressee for checking and confirmation, rectification, amendment or addition, before using it to set up the telecommunication link.

Thus, before dialling, the raw phone number is presented to the user. This will for example allow the user to correct bad prefixes which could prevent a successful dialling.

Indeed, even if a phone number can be found, it may not have the appropriate format for immediate dialling. That is the reason why before dialling, the phone number is advantageously announced to let the user or addressee confirm or add a known prefix for the call to succeed.

Preferably, the aforementioned steps of extracting, searching and setting up are performed by an unified messaging system 7, said system using for example a telephone user interface known as TUI to dial the number of the author or sender of the received electronic mail and to establish the telecommunication link. Such an interface is, for example, described in the European patent application No. 99 440 255.0 in the name of the applicant.

A Unified Messaging System (UMS) is an information system mixing electronic mails, voice messages and faxes in a unique container. The different kind of messages can be handled by a client software on a PC (such as the one known as "Outlook") or by the phone through the so-called TUI (Telephone User Interface) allowing message access be every kind of phone like a standard phone, a GSM, a WAP supporting GSM or a telephone aware personal assistant.

Even if each message type has a most convenient way of access, a nearly full access is granted to the information by using various technologies such as "Text to Speech" to listen to emails, deliver an email or a fax on a fax machine, sending an email and every other kind of electronic document such as a fax and other features.

Among well-known unified messaging systems, one can mention the systems known as "AUM" (Alcatel Unified Messaging) by the applicant, "Unity" by Active Voice or "Unified Messenger" by Lucent.

According to an additional feature of the invention, the unified messaging system may store, after successful linking of the addressee with the author or sender, the correct and complete phone number of the author or sender in the addressee's private directory 3 and/or in a company's directory 4, 5, upon request, or not, of the addressee, possibly by refreshing an earlier stored data.

It should also be noted that, even if the phone call is initiated from the user's private phone set, the return call could be charged to the company.
It should also be noted that, even though the present invention is more particularly concerned with messages in form of proper e-mails, the principal and basic idea of the invention can also be applied to voice (telephone) and telefax messages, which are handled by an UMS in the same way as e-mails and considered as such.

The only difference would be the starting available information used for returning the call (i.e. directly the phone number of the calling person) or for the search of the addressee (i.e. the telefax number of the latter).
The present invention is, of course, not limited to the preferred embodiments described herein, changes can be made or equivalents used without departing from the scope of the invention.

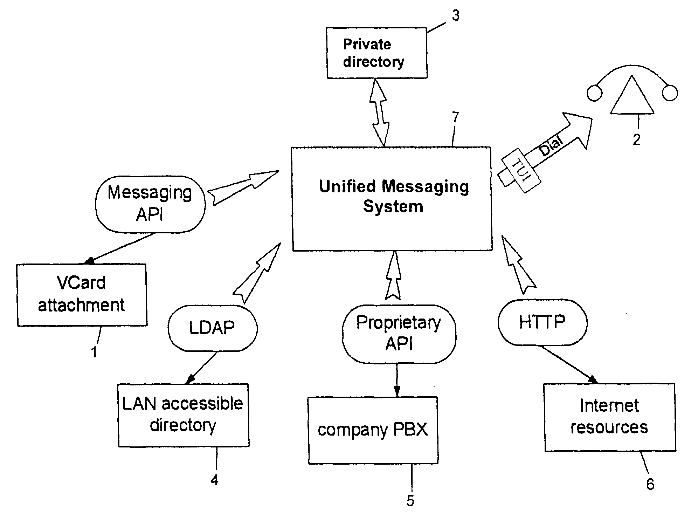

## Claims

1. Method for building up automatically a telecommunication link, especially a telephone link, with the author and/or the sender of a received electronic mail or other message, **characterised in that** it comprises at least the following steps:
- extracting from the electronic mail or from an extension (1) thereof the phone number, the name and/or other identifying coordinates of the author or sender;
- searching, if not available directly from the electronic mail, for the phone number in at least one accessible directory, on the basis of the identified name or coordinates;
- setting up a telecommunication link between the telecommunication device (2) of the addressee of said received electronic mail and the telecommunication device assigned to the retrieved phone number.

2. Method according to claim 1, **characterised in that** the phone number search is carried out in directories selected from the group consisting of: a) the addressee's private directory (3), b) a company phone or address book (4), for example accessible via a lightweight directory access protocol LDAP, c) a company PBX subscriber directory (5), for example accessible through a proprietary access protocol such as an application programming interface API, d) an internet phonebook(s) provider site (6) accessible via HTTP, and e) at least one telecommunication company phone directory stored on a specific support, such as a CD ROM.

3. Method according to anyone of claims 1 and 2, **characterised in that** the following programmed steps are successively performed until the phone number of the author and/or sender is found:
- a) extracting from the received electronic mail the name and/or other identifying coordinates of the author and/or sender, checking if the extracted name and/or other coordinates match(es) with any name or coordinate of the addressee's private directory and, if the case occurs, providing the concerned phone number;
- b) verifying if an electronic mail extension, consisting of a standard formated mail attachment containing personal information about the author or sender, is present and, if the case occurs, extracting the phone number from it;
- c) performing successively, based on the name and/or other coordinates of the author or sender and until the searched phone number is retrieved, searches in the company's phone or address book, in the company's PBX subscriber directory, in one or several electronically stored, integrated telecommunication company phonebook(s) and in at least one phonebook or directory accessible through internet.

4. Method according to anyone of claims 1 and 2, **characterised in that** the following steps are successively performed until the phone number of the author and/or sender is found:
- a) verifying if an electronic mail extension, consisting of a standard formated mail attachment containing personal information about the author or sender, is present and, if the case occurs, extracting the phone number from it;
- b) extracting from the received electronic mail the name and/or other identifying coordinates of the author and/or sender, checking if the extracted name and/or other coordinates match(es) with any name or coordinate of the addressee's private directory and, if the case occurs, providing the concerned phone number;
- c) performing successively, based on the name and/or other coordinates of the author or sender and until the searched phone number is retrieved, searches in the company's phone or address book, in the company's PBX subscriber directory, in one or several electronically stored, integrated telecommunication company phonebook(s) and in at least one through internet accessible phonebook or directory.

5. Method according to anyone of claims 1 to 4, **characterised in that**, as soon as the phone number of the author or sender has been provided by any of the various sources, the said phone number is submitted to the addressee for checking and confirmation, rectification, amendment or addition, before using it to set up the telecommunication link.

6. Method according to anyone of claims 1 to 5, **characterised in that** the steps of extracting, searching and setting up are performed by an unified messaging system (7), said system using for example a telephone user interface TUI to dial the number of the author or sender of the received electronic mail and to establish the telecommunication link.

7. Method according to claim 6, **characterised in that** the unified messaging system stores, after successful linking of the addressee with the author or sender, the correct and complete phone number of the author or sender in the addressee's private directory (3) and/or in a company's directory (4, 5), upon request, or not, of the addressee, possibly by refreshing an earlier stored data.
